# EUROPEAN PATENT APPLICATION

(11) **EP 0 992 894 A1**
(43) Date of publication of application: **12.04.2000**
(21) Application number: 98402462.0
(22) Date of filing: 06.10.1998
(51) Int. Cl.: G06F 9/38, G06F 9/32

(54) **Apparatus and method for loop execution**

(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Laurenti, Gilbert, 06570 Saint Paul de Vence (FR); Ponsot, Eric, 347 route de Cagnes 06140 Vence (FR); Djafarian, Karim, Batiment B1 06140 Vence (FR); Couvrat, Marc, 06700 Saint Laurent du Var (FR)
(74) Representative: Potter, Julian Mark

(57) **Abstract**

A processing engine, comprising an execution unit for executing machine-readable instructions dispatched thereto, and an instruction buffer for temporarily storing a plurality of machine-readable instructions transferred thereto prior to dispatch to the execution unit. The execution unit is responsive to a first machine-readable instruction to initiate iterative execution of a block of machine-readable instructions, including an initial and a final instruction for said block, all locatable in said instruction buffer. During iterative execution, instruction fetch into the instruction buffer is inhibited.

## Description

### FIELD OF INVENTION

The present invention relates to processing engines, and in particular but not exclusively, to processing engines configurable to repeat program flow.

### BACKGROUND OF INVENTION

It is known to provide for parallel execution of instructions in microprocessors using multiple instruction execution units. Many different architectures are known to provide for such parallel execution. Providing parallel execution increases the overall processing speed.. Typically, multiple instructions are provided in parallel in an instruction buffer and these are then decoded in parallel and are dispatched to the execution units. Microprocessors are general purpose processing engines which require high instruction throughputs in order to execute software running thereon, which can have a wide range of processing requirements depending on the particular software applications involved. Moreover, in order to support parallelism, complex operating systems have been necessary to control the scheduling of the instructions for parallel execution.

Many different types of processing engine are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor, machine-readable instructions stored in a program memory are sequentially executed by the processor in order for the processor to perform operations or functions. The sequence of machine-readable instructions is termed a "program". Although the program instructions are typically performed sequentially, certain instructions permit the program sequence to be broken, and for the program flow to repeat a block of instructions. Such repetition of a block of instructions is known as "looping", and the block of instructions are known as a "loop".

When performing a loop, memory access, to program memory for example, has to be performed in order to fetch the instructions to be repeated. Typically, the memory such as the program memory, resides off chip, and the memory access represents a considerable processor cycle overhead. This mitigates against power saving and fast processing at low power consumption, in particular for applications where program loops are likey to be utilised frequently.

The present invention is directed to improving the performance of processing engines such as, for example but not exclusively, digital signal processors.

### SUMMARY OF INVENTION

Particular and preferred aspects of the invention are set out in the accompanying independent claims. Combinations of features from the separate independent claims and the dependent claims maybe combined as appropriate and not merely as explicitly set out in the claims.

In accordance with the first aspect of the invention there is provided a processing engine comprising an execution unit for executing machine-readable instructions despatched to the execution units. The processing engine also comprises an instruction buffer for temporarily storing a plurality of machine-readable instructions which have been transferred to the instruction buffer prior to their dispatch to the execution unit. The execution unit responds to a first machine-readable instruction to initiate an iterative execution of a block of machine-readable instructions locatable in the instruction buffer. The block of machine-readable instructions include both an initial and a final instruction.

In accordance with a second aspect of the invention there is provided a method for operating a processing engine comprising temporarily storing a plurality of instructions in a instruction buffer. The method further comprises repeatedly executing a block of instructions of said plurality of instructions.

An advantage of a preferred embodiment in accordance with the first and second aspects of the invention is that a block of instructions may be repeatedly executed without having to access program memory or cache memory, since all the instructions are already loaded in the instruction buffer. Accordingly, there is a reduced number of processor cycles necessary for execution of the block of instructions and consequently a reduction in power consumption, compared to conventional systems in which instructions comprising a repeated block are fetched from program memory each time they are to be executed.

Preferably, the first instruction comprises an offset which indicates the relative positions of a final instruction and an initial instruction of the block of instructions. This advantageously indicates to the processing engine boundaries of the block of instructions to be repeated. Additionally, a check maybe carried out on the offset to ensure that the final instruction will be located within the instruction buffer. Suitably, this check maybe carried out during compilation or assembly of instruction code for the processing engine. Advantageously, relative addressing may be used for the offset which uses less code than absolute addressing.

In a preferred embodiment the processing engine comprises an instruction pipeline having a plurality of pipelines stages. At least one of these instruction pipeline stages is an instruction fetch stage, during which instruction code is fetched from a program memory in four byte clutches irrespective of instruction boundaries for transfer into the instruction buffer. Advantageously, the fetch stage maybe inhibited for the instruction buffer being full of instructions. Optionally, the fetch stage maybe inhibited subsequent to the fetching of a final instruction for the block of instructions from the program memory into the instruction buffer. Thus, no further processor cycles, and consequently no power in performing those cycles, are used for fetching instructions from program memory once the instruction buffer is full or once the final instruction for the block of instructions has been fetched in to the instruction buffer.

Typically the processing engine includes both a local read program counter and a local write program counter, respectively pointing to the location in instruction buffer of the currently dispatched instruction and the location for writing the next instruction transferred from the program memory. The difference between the local read program counter and local write program counter maybe monitored, and once that difference equals a predetermined value, for example the size of the instruction buffer, then the transfer of instructions, that is to say the fetch stage, to said instruction buffer may be inhibited. Optionally, the inhibition of the transfer of instructions from the program memory may be initiated for the difference between the local read program counter and local write program counter being less than the instruction buffer size. Such a configuration would provide a margin at the boundaries of the instruction buffer to account for any instruction which may go over the boundaries of fetch packets or dispatch packets of instructions.

Suitably, the processing engine is responsive to a second instruction to store an iteration count for repeat execution initiated by the first instruction. In this manner the number of iterations of the buffer instructions can be set up. Generally the iteration count is decremented for each pass of the block of instructions. However, the count step may not necessarily be equal to one, but sum other suitable integer value dependent upon the circumstances.

The processing engine is generally operable to restart the instruction fetch stage responsive to a last iteration of the body of instructions. Typically, the restart of the fetch stage is responsive to the dispatch of the initial instruction for said last iteration.

In a preferred aspect of the invention there is provided a data processing system comprising a processing engine as referred to above and a computer comprising an assembler or compiler operable to align the initial instruction and/or the final instruction with a respective boundary of the instruction buffer in accordance with an operator instruction. This advantageously provides for optimisation of the block size, since all of the instruction buffer may be used by the block since such alignment provides for exact alignment with the top and bottom boundaries of the instruction buffer. Suitably, the assembler or compiler insert no operation codes into the program code to cause said alignment.

In accordance with the preferrerd embodiments of the invention, fewer processing cycles are necessary in order to perform repeat loops since no memory access is required during the loop. This is still the case for processing engines having an instruction cache before the instruction buffer, since it is not necessary to access the cache memory during the local loop. Since there is no need to access memory outside of the processing engine, there is no corresponding switching of large busses ( address/data busses) to access code within a large memory (typically 2K), such access typically consuming more power than a local fetch in the processing engine. Consequently, there is a corresponding reduction in power consumption by the processing engine. Therefore, embodiments of the invention are particularly suitable for use in portable apparatus, such as wireless communication devices. Typically such a wireless communication device comprise a user interface including a display such as liquid crystal display or a TFT display, and a keypad or keyboard for inputting data to the communications device. Additionally, a wireless communication device will also comprise an antenna for wireless communication with a radio telephone network or the like.

### BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:
Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8 is a grid illustrating the status of an instruction buffer queue during a local loop in accordance with an embodiment of the invention; and
Figure 9 is a schematic illustration of a wireless communication device suitable for incorporating in an embodiment of the invention.

### DESCRIPTION OF PARTICULAR EMBODIMENTS

Although the invention finds particular application to Digital Signal Processors (DSPs), implemented for example in an Application Specific Integrated Circuit (ASIC), it also finds application to other forms of processing engines.

The basic architecture of an example of a processor according to the invention will now be described.

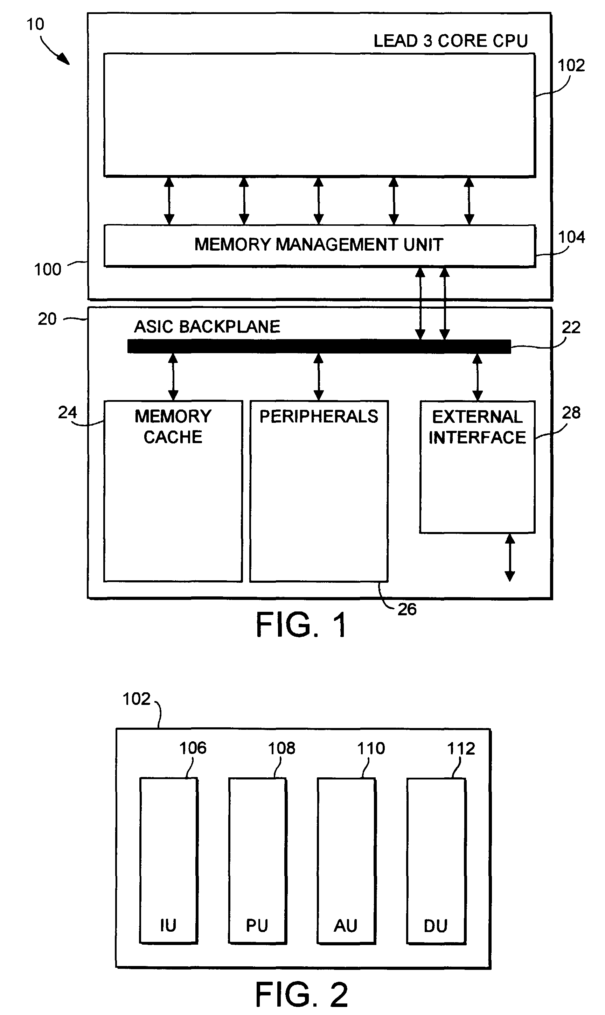

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface, or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10, with the processor backplane 20 being separate therefrom. The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.

Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

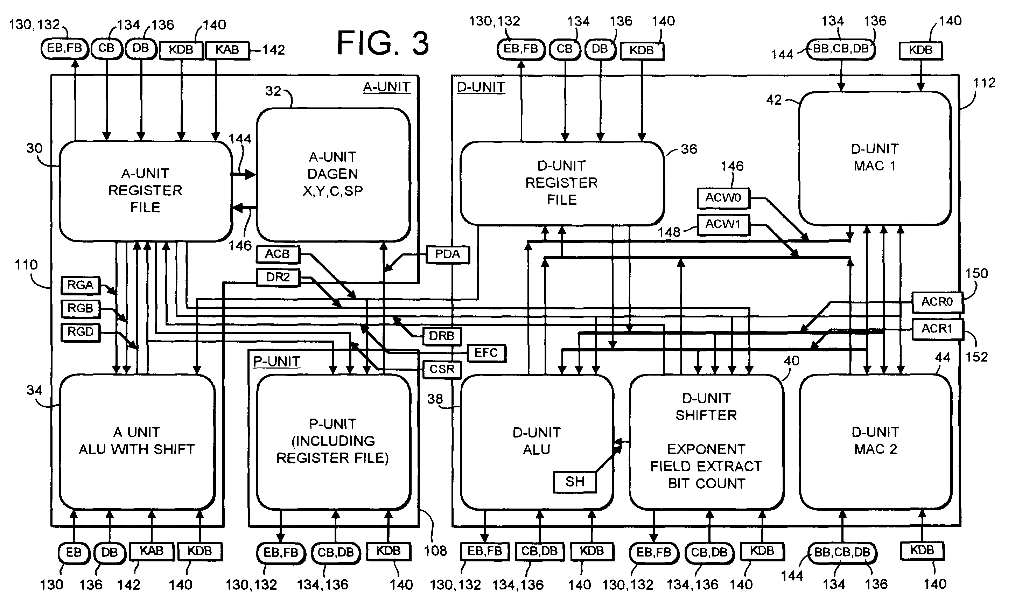

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. As well as the general purpose busses (EB, FB, CB, DB) 130, 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

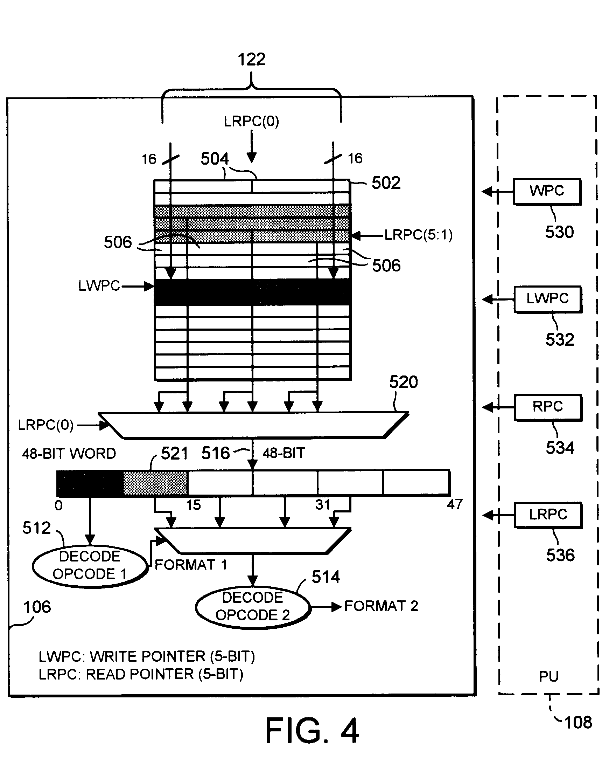

Referring now to Figure 4, there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

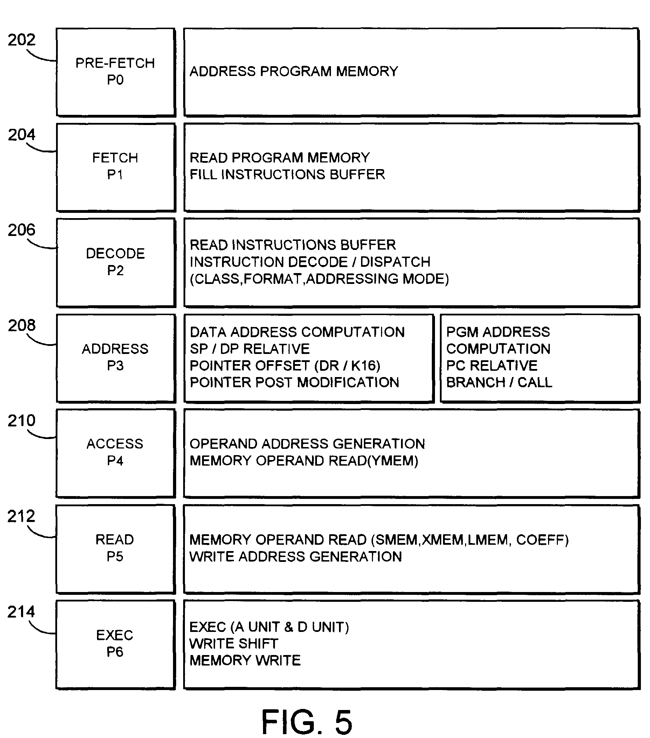

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode, is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

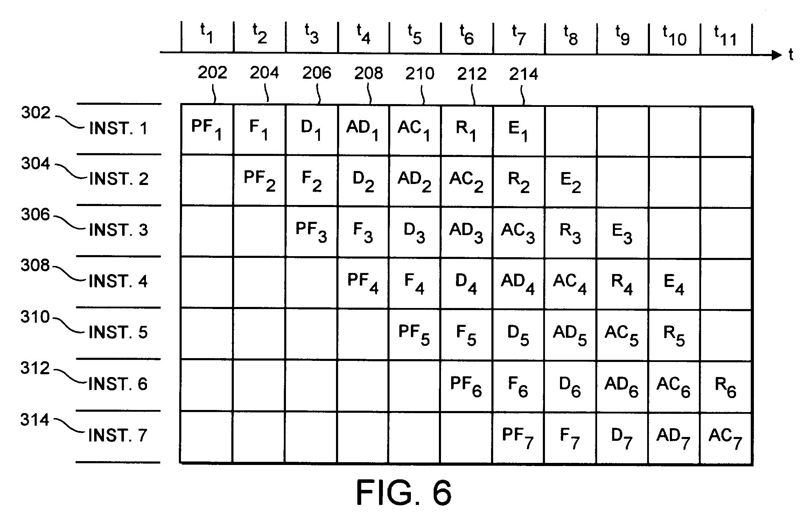

The basic principle of operation for a pipeline processor will now be described with reference to Figure 6. As can be seen from Figure 6, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 6 for a seven stage pipeline a total of 7 instructions may be processed simultaneously. For all 7 instructions 302-314, Figure 6 shows them all under process in time period T₇. Such a structure adds a form of parallelism to the processing of instructions.

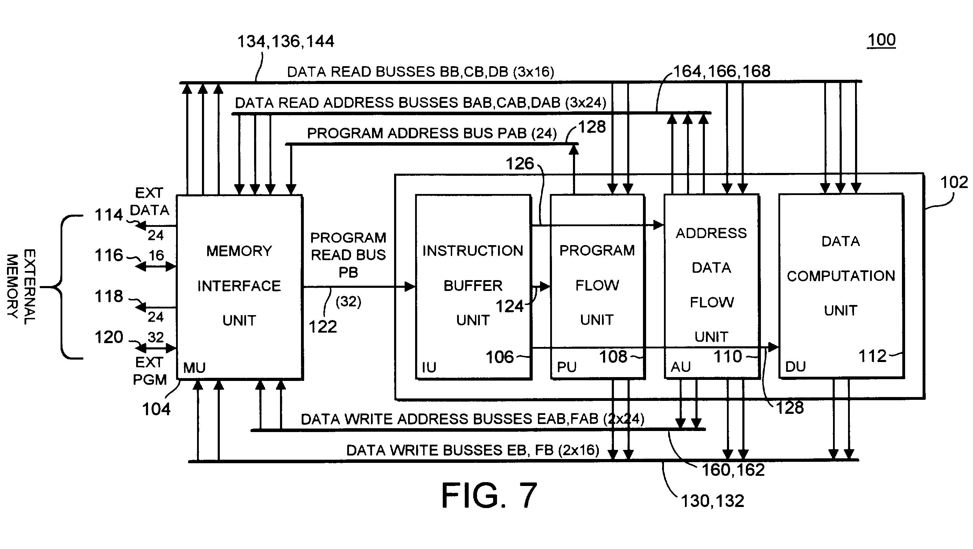

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

In accordance with a preferred embodiment of the invention, the processing engine is configured to respond to a local repeat instruction which provides for an iterative looping through a set of instructions all of which are contained in the Instruction Buffer Queue 502. The local repeat instruction is a 16 bit instruction and comprises: an op-code; parallel enable bit; and an offset (6 bits).

The op-code defines the instruction as a local instruction, and prompts the processing engine to expect the offset and op-code extension. In the described embodiment the offset has a maximum value of 56, which defines the greatest size of the local loop as 56 bytes of instruction code.

Referring now to Figure 4, the IQB 502 is 64 bytes long and is organised into 32×16 bit words. Instructions are fetched into IQB 502 2 words at a time. Additionally, the Instruction Decoder Controller reads a packet of up to 6 program code bytes into the instruction decoders 512 and 514 for each Decode stage of the pipeline. The start and end of the loop, ie first and last instructions, may fall at any of the byte boundaries within the 4 byte packet of program code fetched to the IQB 502. Thus, the start(first) and end(last) instructions are not necessarily co-terminous with the top and bottom of IQB 502. For example, in a case where the local loop instruction spans two bytes across the boundary of a packet of 4 program codes, both the packet of 4 program codes must be retained in the IQB 502 for execution of the local loop repeat. . In order to take this into account the local loop instruction offset is a maximum of 56 bytes.

When the local loop instruction is decoded the start address for the local loop, ie the address after the local loop instruction address, is stored in the Block Repeat Start Address₀ (RSA₀) register which is located, for example, in the P unit 108. After the initial pass through the loop, the Read Program Counter (RPC) is loaded with the contents of RSA₀ for re-entering the loop. The location of the end of the local loop is computed using the offset, and the location is stored in the Block Repeat End Address_{ø} (REA_{ø}) register which may also be located in the P unit 108, for example. Two repeat start address registers and two repeat and address registers (RSA₀, RSA₁, REA₀, REA₁) are provided for nested loops. For nesting levels greater that two, preceding start/end addresses are pushed to a stack register.

During the first iteration of a local loop, the program code for the body of the loop is loaded into the IBQ 502 and executed as usual. However, for the following iterations no fetch will occur until the last iteration, during which the fetch will restart.

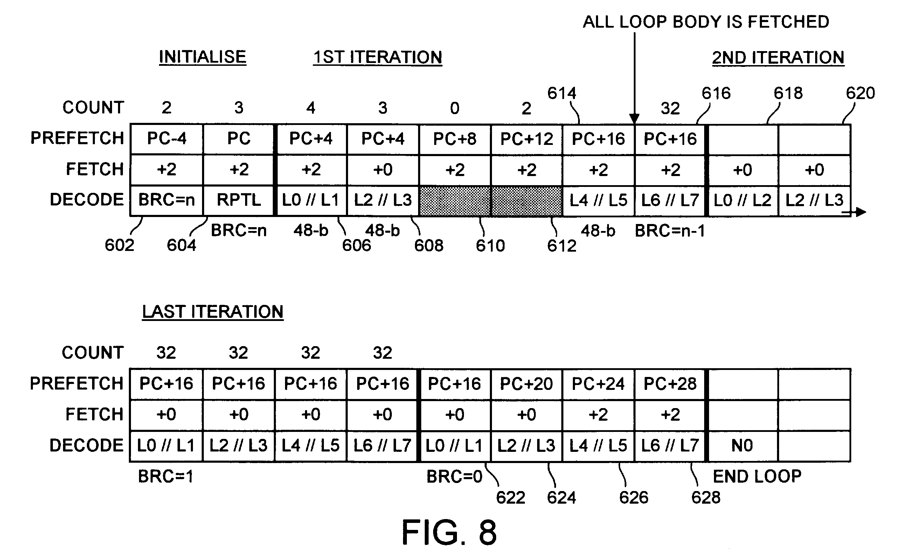

Referring now to Figure 8, the local loop instruction flow for the preferred embodiment will be described. The local loop repeat is set up by initialising a Block Repeat Count (BRC0/BRC1), shown in the DECODE stage in a first pipeline slot 602, with the number of iterations of the local loop, and then in the next slot 604 the local loop instruction (RPTL) itself is decoded. The BRC0/BRC1 is decremented for each repeat of the instructions. It will be evident to a skilled person that optionally the local loop repeat maybe set up by defining a maximum iteration value, and initialising a counter to zero. The counter can then be incremented for each repeat of the instructions. The decrement or increment may be in steps other than one. During slots 602 and 604, the Program Counter increases by 4 bytes to PC, and 2 further instruction words are fetched into the IQB 502, thus 2 instruction words per slot 602, 604 are fetched into IQB 502. In slot 602 the number of words 504 available in the IQB 502 is 2, and is shown labelled Count in Figure 8. The number of words available in the IBQ 502 is given by the difference between the LRPC 536 and the LWPC 532, since they respectively point to the currently dispatched instruction and the location for writing the next instruction into the IBQ 502. Since, for the purposes of this embodiment, the instruction which initialises the BRC0/BRC1 is a one word 16 bit instruction, for example and BRC0/BRC1 =DAx comprises no parallelism, only the 16 bit initialisation instruction is dispatched to the first or second instruction decoder 512, 514 in slot 602.

For the next slot 604, the WPC increases by 4 to PC and a further 2 x 16 bit instruction words 504 are fetched in the IQB 502. The number of instruction words 504 available in the IBQ 502 is now 3, since only the 1 word instruction initialising BRC0/BRC1 was dispatched during the previous slot 602.

The first iteration of the local loop begins at slot 606, where a first parallel pair of instructions L₀, L₁ are dispatched to the decoders 512, 514. The number of instruction words 504 which are available in the IBQ 502 is now 4. This is because in the present embodiment the local loop instruction is only a 16 bit instruction and therefore only one word 504 was dispatched to the decoder 512 during the previous slot 604.

In order to optimise the execution of the local loop, the instructions are executed in parallel so far as is possible. In the present example, it is assumed that all instructions comprising the body of the loop are executable in parallel. This results in two unused slots, 610, 612 during the first pass of the body of the loop, but leads to greater speed for the rest of the iterations.

Additionally, for the present example instructions L₀, L₁ are executable in parallel and comprise a total of 48 bits, thus 3 instruction words 504 are dispatched to the decoders 512, 514 for each decode stage. For the start of the repeat block, cycle 606, two instructions L₀ and L₁are dispatched to the decoders and the difference between the LRPC 536 and the LWPC 532 is 4. In cycle 608 a further two instruction words are fetched into the IBQ, but three words are dispatched.

The LRPC 536 now moves 3 words along the IQB 502, and the LWPC 532 moves 2 words along the IQB 502 to the next fetch location. Thus, the difference between LWPC 532 and LRPC 536 is decreased by one to three for the next slot 608 Again, assuming the next two instructions L₂, L₃ are executable in parallel and comprise a total of 48 bits the LRPC 532 moves 3 words along the IQB 502 ready for the next slot 610. The program pre-fetch is halted for one slot, in this case slot 608, and therefore no instruction words are loaded into the IQB 502 for this slot. Thus, for slot 610 the LRPC 536 and LWPC 532 point to the same IQB 502 address, and Count = 0. Since there are no available bits for dispatch in the IQB 502, slot 610 is an unused slot for decoding. However, 2 instruction words are fetched into the IQB 502 during slot 510 moving LWPC 532 along IQB by two words, and therefore there are 2 instruction words available for slot 612. However, if the next two instructions, L₄, L₅, are parallel instructions comprising 48 bits then there is no dispatch in slot 612, and there is a further unused slot.

For slot 614 there are a total of 4 instruction words 504 available in the IQB 502, and instructions L₄, L₅, comprising 48 bits are dispatched to decoders 512, 514. A further two instruction words 504 are fetched into the IQB 502 during slot, 614. The WPC has now increased by 16 packets of 2 x instruction words 504, and thus the IQB 502 is full and all the loop body has been fetched. Thus, as can be seen, the WPC count for slot 616 remains at PC + 16 for the Pre-Fetch, although a further 2 words 504 are fetched into the IQB 502 originating from the pre-fetch of slot 614.

For slot 616 the body of the loop has been fetched into the IQB 502, and there are 32 words available in the IQB. This is the maximum size of the IQB 502, and hence the fetch is switched off for further slots 618, 620 onwards forming further iterations of the loop.

For the last iteration of the loop, the fetch is switched back on in slot 626 in order to top up the IQB 502 to avoid any gaps in the queue.

Thus, for the body of the loop, excluding the first and last iteration there is no pipeline fetch phase. Thus, there is no program memory access. This reduces power consumption during the loop compared to conventional loops, since fewer program memory accesses are performed.

In a further preferred embodiment the processing engine is configured to align instruction words in the IBQ 502 in order to maximise the block size for a local loop. The alignment of the instruction words may operate to place start and end instructions for a local loop as close to respective boundaries of the IQB 502 as possible.

The processing engine may include a Assembler which configures the alignment of instructions in the IQB 502 to maximise the block size for a local loop.

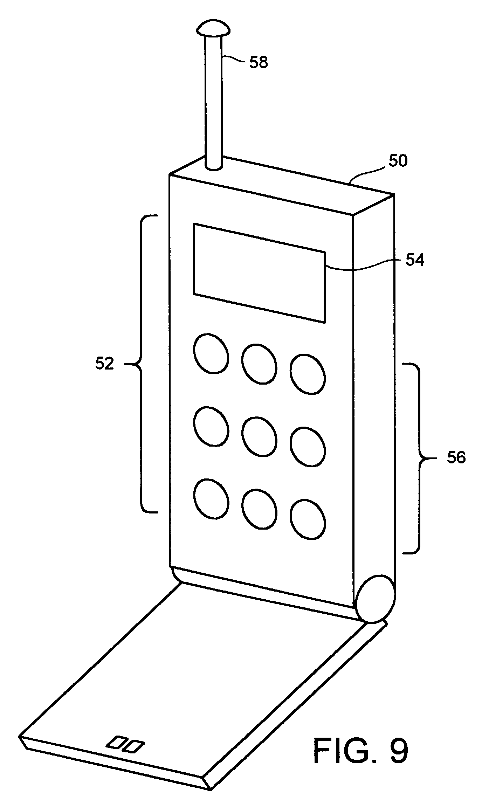

Embodiments of the invention are suitable for wireless communication devices such as a radio telephone 50 illustrated in Fig. 9. Such a radio telephone 50 comprises a user interface 52 including a display 54 such as a liquid crystal display, and a key pad 56. The radio telephone also includes a transceiver, not shown, and an antenna 58.

In view of the foregoing description it will be evident to a person skilled in the art that various modifications may be made within the scope of the invention. For example, the instructions comprising the body of the loop need not be full 48 bit parallel instructions, or even parallel instructions at all. Additionally, the loop need not take up all of the IQB, but may be smaller than that described above. Furthermore, the program memory may comprise a memory cache.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependant claims may be combined with those of the independent claims in any appropriate manner and not merely in the specific combinations enumerated in the claims.

## Claims

1. A processing engine, comprising an execution unit for executing machine-readable instructions dispatched thereto, and an instruction buffer for temporarily storing a plurality of machine-readable instructions transferred thereto prior to dispatch to the execution unit, the execution unit responsive to a first machine-readable instruction to initiate iterative execution of a block of machine-readable instructions residing in said instruction buffer, said block including an initial instruction and a final instruction

2. A processing engine according to claim 1, wherein said first instruction comprises an offset indicative of a position in said buffer of said final instruction relative to a position in said buffer of said initial instruction.

3. A processing engine according to claim 1 or claim 2, further comprising an instruction pipeline having a plurality of pipeline stages, said instruction pipeline providing an instruction fetch stage for fetching instruction code from a program memory for transfer into the instruction buffer.

4. A processing engine according to claim 3, operable to inhibit said instruction fetch stage subsequent to fetching said final instruction from the program memory into the instruction buffer.

5. A processing engine according to claim 3 or claim 4, operable to inhibit said instruction fetch stage for said instruction fetch stage for said instruction buffer being frill.

6. A processing engine according to any preceding claim, further comprising a local write program counter for pointing to a location in said instruction buffer for writing instruction code from said program memory, and a local read program counter for pointing to a location in said instruction buffer corresponding to a currently dispatched instruction, and wherein the processing engine is responsive to a predetermined separation of said local write program counter and said local read program counter equal to inhibit transfer of instruction code to said instruction buffer.

7. A processing engine according to claim 6, wherein said predetermined separation is equal to the size of said instruction buffer.

8. A processing engine according to any preceding claim responsive to a second instruction to store an iteration count for repeat execution initiated by said initial instruction.

9. A processing engine according to claim 8, operable to decrement said iteration count for a pass of said block of instructions.

10. A processing engine according to claims, or any of claims 4 to 9 dependent on claim 3, operable to restart said instruction code fetch stage responsive to a last iteration of said block of instructions.

11. A processing engine according to claim 10, operable to re-start said instruction code fetch stage responsive to dispatch of said initial instruction for said final iteration.

12. A system comprising a processing engine according to any preceding claim and a computer including a compiler or assembler, said compiler or assembler responsive to an operator directive to align an instruction with a boundary of said instruction buffer.

13. A system according to claim 12, wherein said instruction is said initial instruction.

14. A system according to claim 12 or claim 13, wherein said instruction is said final instruction.

15. A system according to any of claims 12 to 14, said compiler or assembler responsive to said operator directive to insert a no operation code in said block of code for aligning said initial and/or final instruction with said boundary.

16. A system according to any of claims 12 to 15, wherein said compiler or assembler checks said offset is not greater than a threshold value.

17. A data processing system, according to claim 16, wherein said threshold value is dependent on the instruction buffer size.

18. A processor comprising a processing engine according to any of claims 1 to 11.

19. An integrated circuit comprising a processing engine according to any of claims 1 to 11.

20. A digital signal processor comprising a processing engine according to any one of claims 1 to 11.

21. An integrated circuit comprising a digital signal processor according to claim 20.

22. A method for operating a processing engine, comprising temporarily storing a plurality of instructions in an instruction buffer, and repeatedly executing a block of instructions of said plurality of instructions.

23. A method according to claim 22, further comprising fetching instruction code from program memory for transfer into said instruction buffer for forming said plurality of instructions.

24. A method according to claim 23, further comprising inhibiting fetching instruction code subsequent to fetching a final instruction to said block of instructions.

25. A method according to claim 23 or 24, further comprising inhibiting fetching instruction code for transfer to said instruction buffer for said instruction buffer being full.

26. A method according to any of claims 23 to 25, further comprising monitoring a first location in said instruction buffer for an instruction being executed and a second location in said instruction buffer for writing an instruction transferred from program memory, and inhibiting said fetching for a difference between said first and second locations equalling a predetermined value.

27. A method according to claim 26, wherein said predetermined value is the instruction buffer size.

28. A method according to any of claims 22 to 28, further comprising storing an iteration count for said repeat execution of said block.

29. A method according to claim 28, further comprising decrementing said iteration count for a pass of said block of instructions.

30. A method according to claim 23 or any of claims 24 to 29 dependent on claim 23, further comprising re-starting said fetching for a last repeat of said body of instructions.

31. A method according to any of claims 22 to 30, further comprising aligning an initial and/or final instruction for said block of instructions with a respective boundary of said instruction buffer.

32. A method according to any of claims 22 to 30, further comprising compiling or assembling said instructions forming said block of instructions for aligning an initial and/or final instruction for said block of instructions with a respective boundary of said instruction buffer.

33. A telecommunications device comprising a processing engine according to any of claims 1 to 11.

34. A telecommunications device operable in accordance with a method of any of claims 22 to 32.

35. A wireless communications device comprising a telecommunications device according to claim 33 or 34, a user interface including a display, a keypad or keyboard for inputting data to the communications device, a transceiver and an antenna.
